# EUROPÄISCHE PATENTSCHRIFT

(11) **EP 0 800 917 B1**
(45) Veröffentlichungstag und Bekanntmachung des Hinweises auf die Patenterteilung: **25.08.1999**
(21) Anmeldenummer: 97105476.2
(22) Anmeldetag: 02.04.1997
(51) Int. Cl.: B41F 35/00

(54) **Verfahren und Vorrichtung zum Reinigen eines Druckmaschinenzylinders und/oder von Walzen**
Process and system for cleaning printing machine cylinders
Procédé et système de nettoyage de cylindres d'une machine d'impression rotative

(30) Priorität: 12.04.1996 DE 19614395
(43) Veröffentlichungstag der Anmeldung: 15.10.1997
(73) Patentinhaber: MAN Roland Druckmaschinen AG, 63075 Offenbach (DE)
(72) Erfinder: Lippold, Andreas, 61130 Nidderau (DE); Dörsam, Edgar, Dr.-Ing., 63179 Obertshausen (DE)
(74) Vertreter: Stahl, Dietmar

(56) Entgegenhaltungen:
- EP-A- 0 531 773
- US-A- 5 183 572

## Beschreibung

Die Erfindung betrifft ein Verfahren und eine Vorrichtung zum Reinigen eines Druckmaschinenzylinders mittels einer Waschvorrichtung und/oder von Walzen in einer Druckmaschine, in einem Kreislauf mit Reinigungsfluid nach dem Oberbegriff des Hauptanspruches.

Eine Vorrichtung dieser Art ist aus der EP 0 531 773 A1 bekannt. Die Reinigungsvorrichtung besitzt als Wiederaufbereitungseinheit ein Destillationsgerät sowie einen nachgeschalteten Schwerkraftscheider, der das Destillat in Wasser und Lösemittel trennt. Danach wird Wasser und Lösemittel einzeln und nacheinander der Waschvorrichtung wieder zugeführt.

Aus der US 4 317 720 ist eine Aufbereitungsanlage bekannt, die nach dem Prinzip der zentrifugalen Sedimentation sowie dem Filterprizip arbeitet. Danach werden grobe Verunreinigungen (Farbe/Feststoffe) durch die Zentrifuge aus dem Waschmittel und feinere Verunreinigungen durch einen Filter aus dem Waschmittel getrennt.

Aus der US-A-5183572 ist ein Verfahren, bzw. eine Vorrichtung bekannt, bei dem das verunreinigte Reinigungsfluid innerhalb eines Schwerkraftabscheiders in die Phasen Wasser und Lösungsmittel getrennt wird. Die getrennten Phasen werden einem Filter zugeführt, und ein Gemisch aus Wasser und Schmutzpartikeln durch eine am Boden des Abscheiders angeordnete Leitung abgeführt.

Aufgabe der Erfindung ist es, ein Verfahren und eine Vorrichtung zum Reinigen eines Druckmaschinenzylinders bzw. von Walzen zu entwickeln, das bzw. die mit geringem Aufwand in einem Kreislaufsystem einen hohen Reinigungsgrad des Reinigungsfluides, insbesondere bei Reinigungsfluiden auf vegetabiler Basis, erzielt. Gelöst wird das durch die Ausbildungsmerkmale von Haupt- und Nebenanspruch. Weiterbildungen ergeben sich aus den Unteransprüchen.

Die erfindungsgemäße Lösung besteht in einem mehrstufigen Trennverfahren und entsprechender Vorrichtung für das verbrauchte Reinigungsfluid, wobei das Reinigungsfluid in seine Bestandteile (Phasen)
- suspendierte Feststoffe
- Waschmittel/Lösungsmittel und
- Wasser getrennt wird.

Dabei sind keine zusätzlichen Verfahrensschritte, wie beispielsweise das Destillieren, erforderlich.

Von allen Waschvorrichtungen bzw. verunreinigten Walzen der Druckmaschine wird das verunreinigte Reinigungsfluid in einem Kreislauf einer ersten Sedimentiereinrichtung zugeführt. Darin scheidet sich das leichtere Waschmittel/Lösungsmittel oberhalb, das schwerere Wasser unterhalb in der Einrichtung ab. Zwischen Waschmittel und Wasser konzentrieren sich suspendierte Feststoffe. Die suspendierten Feststoffe bilden sich aus Farbpartikeln, Papierstaub und/oder Puder. Dabei sind alle Sedimentiereinrichtungen bevorzugt in ihrer Dimensionierung so ausgelegt, daß die Aufnahmebehälter schmal und hoch ausgelegt sind. Damit wird ein höherer Wirkungsgrad der Trennung erzielt. Nach einem definierten Zeitraum haben sich die Bestandteile des verunreinigten Reinigungsfluides weitestgehend räumlich getrennt. Nun kann das Reinigungsfluid vorzugsweise an einer tiefgelegenen Stelle abgelassen oder auch abgesaugt werden. Beim Ablassen fließt zuerst das gereinigte Wasser, danach die suspendierten Feststoffe und letztlich das Waschmittel/Lösungsmittel zeitlich getrennt aus dem Behälter ab.

Im Kreislauf sind Sensoren angeordnet, die zur Unterscheidung der sedimentierten Bestandteile, welche über eine entsprechende Ansteuerung von nachgeordneten Ventilen die Förderung der Bestandteile zur weiteren Trennung in die entsprechenden Aufnahmebehälter der nachgeordneten Sedimentiereinrichtungen weiterleiten. In dieser Betriebsweise sind beliebig viele Sedimentiereinrichtungen (n-fach) hintereinander anordbar. Nach der letzten Sedimentiereinrichtung bzw. Sedimentierstufe wird das gereinigte Waschmittel/Lösungsmittel und das gereinigte Wasser separat zu den Waschvorrichtungen bzw. Walzen der Druckmaschine im Kreislauf transportiert. Bei Bedarf können dabei Zusätze zugeführt werden. Die suspendierten Feststoffe liegen als mehrfach konzentrierte Emulsion vor und können z.B. mit Flockungsmittel eingedickt und/oder einem Entsorgungsbehälter zugeführt werden. Je nach bereits erzieltem Reinigungsgrad kann das Wasser sowie Waschmittel/Lösungsmittel auch früher in den Kreislauf eingespeist werden. Zur Erzielung eines akzeptables Reinigungsgrades sind jedoch mindestens zwei in Reihe nachgeordnete Sedimentiereinrichtungen im Kreislauf erforderlich. In den Kreislauf kann bei Bedarf auch frisches Wasser sowie frisches Waschmittel/Lösemittel zugeführt werden.

Die Erfindung soll an einem Ausführungsbeispiel näher erläutert werden.
Dabei zeigt:

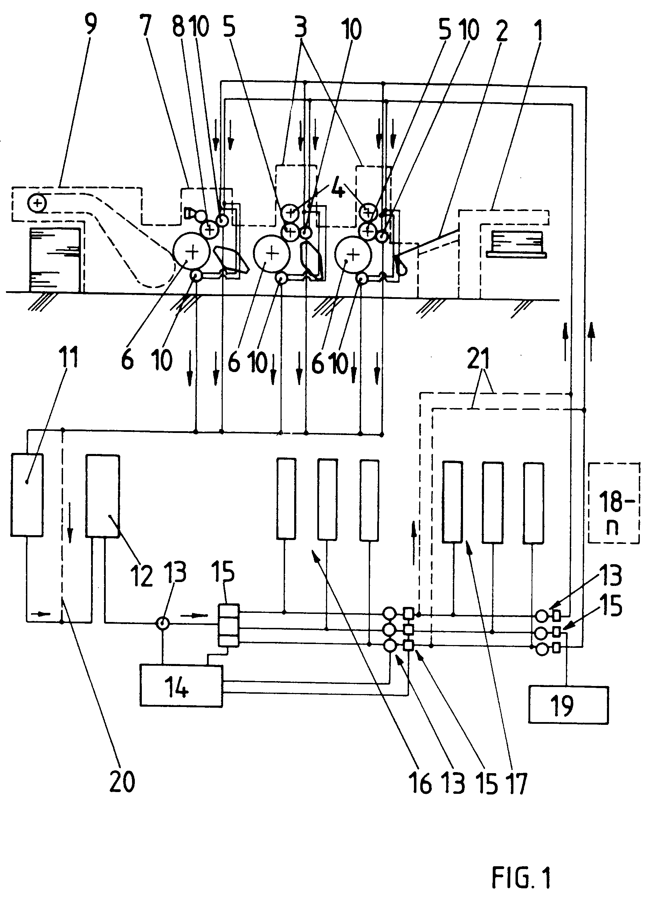

- Fig. 1: eine mit Waschvorrichtungen versehene Druckmaschine sowie im Kreislauf angeordnete Sedimentiereinrichtungen.

Das vorliegende Beispiel bezieht sich auf eine Bogenrotationsdruckmaschine mit einem Anleger 1, einem Zuführtisch 2, zwei in Reihe angeordneten Druckeinheiten 3, einer Lakkiereinheit 7 und einem Ausleger 9. Jede Druckeinheit 3 besteht aus einem Plattenzylinder 4, einem Gummituchzylinder 5 sowie einem Druckzylinder 6, wobei für den Bogentransport zwischen den Druckeinheiten 3 Transfertrommeln für die Bogenübergabe angeordnet sind. Die Lackiereinheit 7 besitzt einen Formzylinder 8 sowie ebenfalls einen Druckzylinder 6. Auf die Ausbildung von Farb- und Feuchtwerk in den Druckeinheiten 3 sowie des Dosiersystemes in der Lackiereinheit 7 soll hier nur insofern eingegangen werden, daß Farb-und Feuchtwerk im Farbwalzenzug eine angeordnete Reinigungsfluidzuführung und eine Abführeinrichtung für verschmutztes Reinigungsfluid besitzen. Die Reinigungsfluidzuführung ist vorzugswise durch Sprühdüsen und die Abführeinrichtung ist vorzugsweise durch eine an eine Walze an- und abstellbare Rakel gebildet. Reinigungsfluidzuführung und Abführeinrichtung sind in einen nachstehend beschriebenen Kreislauf leitungsseitig eingebunden.
Aus Gründen der Übersichtlichkeit ist in Fig. 1 die Einbindung der Walzen in den Kreislauf nicht gezeigt.

Jedem Gummituchzylinder 5, jedem Druckzylinder 6 sowie dem Formzylinder 8 ist eine Waschvorrichtung 10 an- und abstellbar zugeordnet. Die Waschvorrichtung 10 kann dabei eine Waschwalze oder ein Waschtuch aufnehmen. Weiterhin kann die Waschvorrichtung auch als Sprüheinrichtung oder kombinierte Sprüh-Saugeinrichtung ausgebildet sein.

Jede Waschvorrichtung 10 sowie jeder Walzenzug (Farb-/Feuchtwerk) weist eine separate Zuführung für Wasser und Waschmittel/Lösungsmittel und eine gemeinsame Abführung von verunreinigtem Reinigungfluid auf und bilden somit einen Kreislauf. In diesen Kreislauf sind den Waschvorrichtungen 10 bzw. den Walzen mehrere Sedimentiereinrichtungen 12, 16 bis n für die Aufbereitung des verunreinigten Reinigungsfluides nachgeordnet.

Die erste Sedimentiereinrichtung 12 ist als ein Aufnahmebehälter für das Reinigungsfluid ausgebildet. Die zweite Sedimentiereinrichtung 16 sowie jede weitere Sedimentiereinrichtung 17, 18 sowie gegebenenfalls weitere n-fach nachgeschaltete Sedimentiereinrichtungen n sind mit je drei Aufnahmebehältern ausgebildet. Jede Sedimentiereinrichtung 16 bis n ist mit einem Aufnahmebehälter für suspendierte Feststoffe, einem Aufnahmebehälter für Waschmittel/Lösungsmittel und einem Aufnahmebehälter für Wasser ausgebildet. Die Aufnahmebehälter für die entsprechenden Bestandteile sind leitungsseitig untereinander verbunden und sind vorzugsweise mit größerer Höhe und geringerer Breite ausgebildet.

Im Leitungssystem sind jeder Sedimentiereinrichtung 16 bis n schaltbare Ventile 15, der Anzahl der Leitungen entsprechend, vorgeordnet. Die Ventile 15 sind manuell, jedoch vorzugsweise elektronisch steuerbar. Dazu ist der Sedimentiereinrichtung 16 ein Sensor 13 im Kreislauf vorgeordnet, der mittels einer elektronischen Steuerung 14 gekoppelt drei nachgeordnete Ventile 15 steuert. Alternativ können auch mehrere Sensoren 13 zur Erkennung der Phasen von Wasser, Waschmittel/Lösemittel und suspendierter Feststoffe zum Einsatz kommen. Der Sedimentiereinrichtung 17 sowie jeder weiteren Sedimentiereinrichtung 18 bis n ist jedem Ventil 15 ein Sensor 13 vorgeordnet. Alle Sensoren 13 sind wiederum mit der elektronischen Steuerung 14 gekoppelt. Zwischen der Sedimentiereinrichtung 12 und der Sedimentiereinrichtung 16 verzweigt sich bevorzugt an den untereinander verbundenen-Ventilen 15 das Leitungssystem entsprechend den Bestandteilen des verunreinigten Reinigungsfluides.

In bevorzugter Ausbildung ist der ersten Sedimentiereinrichtung 12 ein Leitungssystem mit einem Pufferspeicher 11 vorgeordnet. Dieser dient der Zwischenspeicherung und nimmt das verunreinigte Reinigungsfluid kontinuierlich auf, gibt es jedoch periodisch an die erste Sedimentiereinrichtung 12 ab. Der jeweils letzten Sedimentiereinrichtung 17 bzw. 18 bis n ist im Leitungssystem für die suspendierten Feststoffe ein Entsorgungsbehälter 19 nachgeordnet. Hier können Flockungsmittel zugeführt und/oder eine entsprechende Entsorgung durchgeführt werden. Je nach verwendetem Reinigungsfluid können die den Sedimentiereinrichtungen 12, 16 nachfolgenden Sedimentiereinrichtungen 17 bis n auch lediglich aus Aufnahmebehältern für Waschmittel/Lösemittel und ggf. für Wasser gebildet werden.

Die Wirkungsweise ist wie folgt:
Von den Waschvorrichtungen 10 und/oder von den Abführeinrichtungen der Walzen wird über das den Kreislaufbildende Leitungssystem verunreinigtes Reinigungsfluid abgeführt. Ist ein Pufferspeicher 11 vorhanden, so wird das verunreinigte Reinigungsfluid dort zwischengelagert, ansonsten wird stets eine definierte Menge Reinigungsfluid direkt der ersten Sedimentiereinrichtung 12 über die Leitungen 20 zugeführt. Das Reinigungsfluid wird dabei periodisch zu- und abgeführt, um bereits getrennte Bestandteile nicht erneut zu durchmischen. In der ersten Sedimentiereinrichtung 12 wird die Flüssigkeitsmenge in Ruhe stehen gelassen. Dadurch trennt sich das Reinigungsfluid durch den Einfluß der Schwerkraft von selbst in die drei Phasen: suspendierte Feststoffe, Waschmittel/Lösungsmittel und Wasser. Danach wird die Sedimentiereinrichtung 12 entleert, indem die drei Phasen den drei nachgeordneten Behältern der Sedimentiereinrichtung 16 über die schalbaren Ventile 15 zur weiteren Trennung zugeführt werden. In der Sedimentiereinrichtung 16 werden die drei Phasen wiederum einer Schwerkrafttrennung unterzogen, da in den Phasen noch geringe Anteile der weiteren Phasen vorhanden sind. Je nach Verschmutzungsgrad des Reinigungsfluides können der Sedimentiereinrichtung 16 beliebig viele weitere Sedimentiereinrichtungen 17 bis n mit vorzugsweise je drei Behältern nachgeordnet werden.

Die Sensoren 13 und Ventile 15 werden durch die elektronische Steuerung 14 aktiviert. Die Sensoren 13 erkennen die Reinheit der getrennten Phasen, so daß beispielsweise Wasser oder Waschmittel/Lösungsmittel vor der Sedimentiereinrichtung 17 bereits über die Rücklaufleitung 21 wieder in den Kreislauf eingespeist werden, während die suspendierten Feststoffe nochmals in der Sedimentiereinrichtung 17 getrennt werden. Anschließend werden die restlichen Bestandteile von Wasser und Waschmittel in den Kreislauf eingespeist, die suspendierten Feststoffe sind durch die Trennung weiter eingedickt worden und können dem Entsorgungsbehälter 19 zugeführt werden.

### Bezugszeichenliste

- 1: Anleger
- 2: Zuführtisch
- 3: Druckeinheit
- 4: Plattenzylinder
- 5: Gummituchzylinder
- 6: Gegendruckzylinder
- 7: Lackiereinheit
- 8: Formzylinder
- 9: Ausleger
- 10: Waschvorrichtung
- 11: Pufferspeicher
- 12: erste Sedimentiereinrichtung
- 13: Sensor
- 14: elektronische Steuerung
- 15: Ventil
- 16: zweite Sendimentiereinrichtung
- 17: dritte Sedimentiereinrichtung
- 18 bis n: Sedimentiereinrichtung
- 19: Entsorgungsbehälter
- 20: Zuführleitung
- 21: Rücklaufleitung

## Patentansprüche

1. Verfahren zur Reinigung eines Druckmaschinenzylinders mit einer Waschvorrichtung und/oder von Walzen in einer Druckmaschine, der bzw. denen in einem Kreislauf Waschmittel/Lösemittel und Wasser als Reinigungsfluid zugeführt werden und das verunreinigte Reinigungsfluid in einer Sedimentiereinrichtung getrennt wird und nach erfolgter Reinigung getrennt aufbereitet wieder zugeführt wird.
**dadurch gekennzeichnet,**
daß das verunreinigte Reinigungsfluid durch Sedimentieren der drei Bestandteile
- Waschmittel/Lösungsmittel als Oberschicht,
- suspendierte Feststoffe als Zwischenschicht und
- Wasser als Unterschicht
bei Einwirkung der Schwerkraft getrennt wird.

2. Vorrichtung zur Reinigung eines Druckmaschinenzylinders mit einer Waschvorrichtung und/oder Walzen in einer Druckmaschine, der bzw. denen in einem Kreislauf Waschmittel/Lösemittel und Wasser als Reinigungsfluid zugeführt werden und das verunreinigte Reinigungsfluid in einer Sedimentiereinrichtung getrennt wird und nach erfolgter Reinigung getrennt aufbereitet wieder zugeführt wird,
**dadurch gekennzeichnet**,
daß der Waschvorrichtung sowie den Walzen mindestens zwei leitungsseitig verbundene Sedimentiereinrichtungen (12, 16) in Reihe nachgeordnet sind, wobei die erste Sedimentiereinrichtung (12) aus einem Aufnahmebehälter für das verbrauchte Reinigungsfluid gebildet ist und die zweite Sedimentiereinrichtung (16) aus drei untereinander im Kreislauf gekoppelte Aufnahmebehälter, für
1. suspendierte Feststoffe,
2. Waschmittel/Lösemittel und
3. Wasser,
gebildet ist.

3. Vorrichtung nach Anspruch 2,
**dadurch gekennzeichnet,**
daß der Waschvorrichtung sowie den Walzen leitungsseitig ein Pufferspeicher (11) vorgeordnet ist.

4. Vorrichtung nach Anspruch 2,
**dadurch gekennzeichnet**,
daß die erste Sedimentiereinrichtung (12) ein Pufferspeicher (11) ist.

5. Vorrichtung nach Anspruch 2,
**dadurch gekennzeichnet**,
daß die dritte sowie jede weitere Sedimentiereinrichtung (17 bis n) durch mindestens einen im Kreislauf gekoppelten Aufnahmebehälter für Waschmittel/Lösemittel gebildet ist.

6. Vorrichtung nach Anspruch 2 und 5,
**dadurch gekennzeichnet**,
daß jeder Sedimentiereinrichtung (16 bis n) schaltbare Ventile (15) im Leitungssystem vorgeordnet sind, die manuell oder elektronisch steuerbar sind.

7. Vorrichtung nach Anspruch 2,
**dadurch gekennzeichnet**,
daß vor der Sedimentiereinrichtung (16) mindestens ein Sensor (13) für drei nachfolgende Ventile (15) angeordnet ist, wobei Sensor (13) und Ventile (15) mit einer elektronischen Steuerung (14) gekoppelt sind.

8. Vorrichtung nach Anspruch 2,
**dadurch gekennzeichnet**,
daß vor jeder Sedimentiereinrichtung (17 bis n) pro Ventil (15) ein Sensor (13) angeordnet ist, wobei Ventil (15) und Sensor (13) mit einer elektronischen Steuerung (14) gekoppelt sind.

9. Vorrichtung nach Anspruch 2,
**dadurch gekennzeichnet**,
daß die Aufnahmebehälter eine größere Höhe und eine geringere Breite aufweisen

## Claims

1. Process for cleaning a printing press cylinder with a washing device and/or of rollers in a printing press to which in a circuit washing agent/solvent and water as a cleaning fluid are fed and the contaminated cleaning fluid is separated in a sedimentation unit and after successful cleaning prepared separated and fed back in again,
characterised in that the contaminated cleaning fluid is separated under the action of gravity into the three components
- washing agent/solvent as upper layer
- suspended solids as intermediate layer and
- water as lower layer.

2. Device for cleaning a printing press cylinder with a washing device and/or rollers in a printing machine to which in a circuit washing agent/solvent and water are fed as cleaning fluid and the contaminated cleaning fluid is separated in a sedimentation unit and after cleaning has resulted prepared separately fed back again, characterised in that arranged downstream of the washing device as well as of the rollers in series are at least two sedimentation units (12, 16) connected by leads wherein the first sedimentation unit (12) is formed by a receiving container for the used cleaning fluid and the second sedimentation unit (16) is formed of three receiving containers linked with one another in the circuit for
1. suspended solids,
2. washing agent/solvent and
3. water.

3. Device according to Claim 2, characterised in that arranged prior to the washing device as well as the rollers on the lead side is a buffer store (11).

4. Device according to Claim 2, characterised in that the first sedimentation unit (12) is a buffer store (11).

5. Device according to Claim 2, characterised in that the third as well as each further sedimentation unit (17 to n) is formed by at least one receiving container linked into the circuit for washing agent/solvent.

6. Device according to Claim 2 and 5, characterised in that arranged prior to each sedimentation unit (16 to n) in the lead system are switchable valves (15) which are controllable manually or electronically.

7. Device according to Claim 2, characterised in that arranged prior to the sedimentation unit (16) is at least one sensor (13) for three subsequently arranged valves (15), wherein sensor (13) and valves (15) are linked with an electronic control (14).

8. Device according to Claim 2, characterised in that prior to each sedimentation unit (17 to n) per valve (16) there is arranged a sensor (13), wherein valve (15) and sensor (13) are linked with an electronic control (14).

9. Device according to Claim 2, characterised in that the reception containers have a substantial height and a narrow width.

## Revendications

1. Procédé pour nettoyer un cylindre d'une machine d'impression avec un dispositif de lavage et/ou des rouleaux dans une machine d'impression, un agent de lavage/solvant et de l'eau, comme fluide de nettoyage, y étant amenés dans un circuit, et le fluide de nettoyage pollué étant séparé dans un dispositif de sédimentation et, après avoir effectué le nettoyage, ramené traité de façon séparée,
caractérisé en ce que le fluide de nettoyage pollué est séparé sous l'action de la gravité par sédimentation des trois constituants :
- agent de lavage/solvant, comme couche supérieure,
- matières solides en suspension, comme couche intermédiaire, et
- eau, comme couche inférieure.

2. Dispositif pour nettoyer un cylindre d'une machine d'impression avec un dispositif de lavage et/ou des rouleaux dans une machine d'impression, un agent de lavage/solvant et de l'eau, comme fluide de nettoyage, y étant amenés dans un circuit, et le fluide de nettoyage pollué étant séparé dans un dispositif de sédimentation et, après avoir effectué le nettoyage, ramené traité de façon séparée,
caractérisé en ce qu'au moins deux dispositifs de sédimentation (12, 16) reliés du côté des conduits sont agencés en série en aval du dispositif de lavage ainsi que des rouleaux, le premier dispositif de sédimentation (12) étant formé par un récipient de réception pour le fluide de nettoyage consommé et le second dispositif de sédimentation (16) étant formé par trois récipients de réception couplés les uns aux autres dans le circuit, pour :
1. matières solides en suspension,
2. agent de lavage/solvant, et
3. eau.

3. Dispositif selon la revendication 2,
caractérisé en ce qu'un réservoir tampon (11) est disposé en amont du dispositif de lavage ainsi que des rouleaux, du côté des conduits.

4. Dispositif selon la revendication 2,
caractérisé en ce que le premier dispositif de sédimentation (12) est un réservoir tampon (11).

5. Dispositif selon la revendication 2,
caractérisé en ce que le troisième ainsi que chaque autre dispositif de sédimentation (17 à n) sont formés par au moins un récipient de réception coupé dans le circuit pour l'agent de lavage/solvant.

6. Dispositif selon les revendications 2 et 5,
caractérisé en ce que des valves commutables (15) sont agencées dans le système de conduits en amont de chaque dispositif de sédimentation (16 à n), lesquelles sont commandables de façon manuelle ou électronique.

7. Dispositif selon la revendication 2,
caractérisé en ce que, avant le dispositif de sédimentation (16), il est agencé au moins un capteur (13) pour trois valves suivantes (15), le capteur (13) et les valves (15) étant couplés à une commande électronique (14).

8. Dispositif selon la revendication 2,
caractérisé en ce que, avant chaque dispositif de sédimentation (17 à n), il est agencé, par valve (15), un capteur (13), la valve (15) et le capteur (13) étant couplés à une commande électronique.

9. Dispositif selon la revendication 2,
caractérisé en ce que les récipients de réception présentent une hauteur plus grande et une largeur plus faible.
